# EUROPEAN PATENT SPECIFICATION

(11) **EP 3 821 954 B1**
(45) Date of publication and mention of the grant of the patent: **22.03.2023**
(21) Application number: 19835018.3
(22) Date of filing: 08.07.2019
(51) Int. Cl.: A63B 47/00, B65G 33/04

(54) **BALL LIFTING SYSTEM**
BALLHEBESYSTEM
SYSTÈME DE LEVAGE DE BALLON

(30) Priority: 09.07.2018 KR 20180079225
(43) Date of publication of application: 19.05.2021
(73) Proprietor: Cho, Byoungkoo, Gyeonggi-do 12667 (KR); Jeong, Yeonuk, Seoul 04782 (KR); Kim, Bosub, Daegu 42053 (KR); Han, Changsuk, Daegu 41849 (KR)
(72) Inventor: Cho, Byoungkoo, Gyeonggi-do 12667 (KR); Jeong, Yeonuk, Seoul 04782 (KR); Kim, Bosub, Daegu 42053 (KR); Han, Changsuk, Daegu 41849 (KR)
(74) Representative: Sach, Greg Robert
(86) International application number: PCT/KR2019/008347
(87) International publication number: WO 2020/013546

(56) References cited:
- EP-A1- 3 246 075
- CN-U- 203 938 118
- JP-A- H 061 418
- JP-U- S 508 685
- KR-A- 20020 072 149
- KR-A- 20060 015 696
- KR-B1- 100 756 995
- US-A- 4 970 746

## Description

### BACKGROUND OF THE INVENTION

### (a) Field of the Invention

The present disclosure relates to a ball lifting device. More particular, the present disclosure relates to a ball lifting device that enables the ball to smoothly lift along a spiral guide and can be used in connection with the ball supply system for a ball game.

### (b) Description of the Related Art

A ball lifting device for using a ball used in sport events such as golf or bowling for educational, entertainment, or amusement purposes is known.

For example, Korean Registered Utility Model No. 20-0435097 discloses a technology for moving upward a golf ball up to an automatic golf ball tee-up portion using a vertically inclined ball transferring small screw.
However, this design does not specifically disclose the structure of the screw, and there is a risk that a small ball falls out of the gap between the screws. Further, this design makes it easy to move a ball of solid material, for example, metal, stone, plastic material, etc., but is not suitable for moving balls made by injecting gas into rubber or leather.

U.S. Patent No. 5,076,582 discloses a device that lifts a bowling ball along a track using the frictional force of a conveyor belt, wherein the conveyor belt is driven by pulleys.

However, among the above-mentioned prior patents, a device for stably and smoothly lifting a ball filled with air, in particular, a device for quickly lifting and supplying a ball for sports purposes, has not yet been commercialized.

EP 3246075 A1 discloses a ball supply apparatus comprising: a housing coupled to the upper portion of the column structure, wherein a top portion of housing is partially opened, wherein the housing is divided by a partition into a ball storage portion and a ball discharge portion, wherein a bottom face of the ball storage portion is inclined downward toward the ball discharge portion.

### SUMMARY OF THE INVENTION

### [Technical Problem]

Therefore, the present disclosure aims to provide a ball lifting device that stably lifts a ball filled with air, can see the movement and trajectory of the ball, and is easy to be installed and operated.

### [Technical Solution]

In order to achieve the above object, the present disclosure provides a ball lifting system as defined in claim 1.

### [ADVANTAGEOUS EFFECTS]

The present disclosure can provide a ball lifting device that lifts a ball smoothly and quickly, can impart an appropriate movement to the ball, can be easily installed in an appropriate place, and has excellent strength and durability.

The present disclosure exerts the effect that the air-filled ball can be lifted and moved up and down quickly and smoothly.

### BRIEF DESCRIPTION OF THE DRAWINGS

FIG. 1 is an overall perspective view of a ball rolling system including a ball lifting device not falling within the scope of the claimed invention.
FIG. 2 is an enlarged perspective view of the lower portion of the ball lifting device of FIG. 1;
FIG. 3 is a perspective view of a ball lifting device according to a non-claimed embodiment of the present disclosure;
FIG. 4 is a perspective view of a ball lifting device according to an embodiment of the present disclosure;
FIG. 5 is another perspective view of a ball lifting device according to another embodiment of the present disclosure;
FIG. 6 is a partial view showing a portion in which a guide frame is provided adjacent to a vertical post and rollers are continuously provided inside the guide frame in a height direction; and
FIG. 7 is a photograph embodying FIG. 6.

### DETAILED DESCRIPTION OF THE EMBODIMENTS

Hereinafter, some embodiments of the present disclosure will be described with reference to the accompanying exemplary drawings. In the following description, it should be noted that the same elements will be designated by the same reference numerals although they are shown in different drawings. Further, in the following description of the present disclosure, when is determined that a detailed description of the related known configuration or function make the subject matter of the present disclosure rather unclear, the detailed description thereof will be omitted.

Also, in describing the components of the present disclosure, symbols such as the first, second, i), ii), a), and b) can be used. These are solely for the purpose of differentiating one component from the other but not to imply or suggest the substances, order or sequence of the components. Further, throughout the specification, when a part is referred to as "including" or "comprising" a certain component, it means that it can further include other components, without excluding the other components, unless otherwise stated. If a component is described as 'connected', 'provided', or 'attached' to another component, it may mean the components are not only directly 'connected', 'provided', or 'attached' but also are indirectly 'connected', 'coupled', or 'linked' via a third component, and it should be construed in the broadest possible meaning.

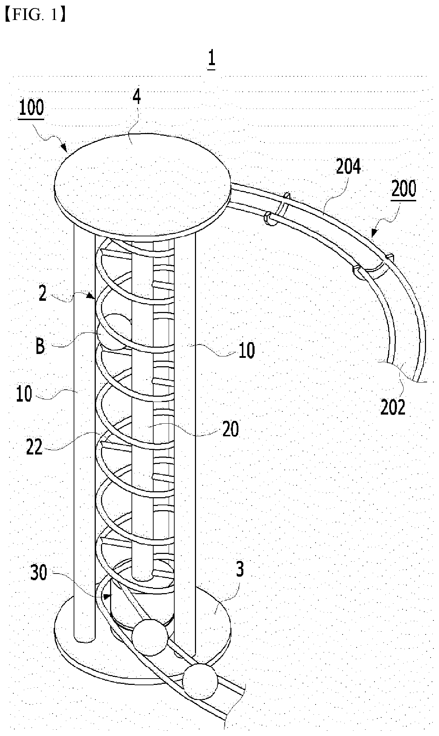

FIG. 1 is an overall perspective view of a ball rolling system 1 including a ball lifting device 100 of the present disclosure. The ball rolling system 1 includes a ball lifting device 100 and a ball rolling section 200 continuously provided thereto. The ball rolling system 1 can be installed in a school, a science exhibition hall, an outdoor camp for science, or the like for educational or amusement purposes. In particular, the ball rolling system 1 of the present disclosure can be utilized for the use which automatically supplies a ball of a ball game event to a player in cooperation with a sports facility.

The ball lifting device 100 is a device that vertically lifts the ball B from the ground to a position in the air, and has a structure in which a shaft 20 is provided vertically long by connecting a central portion between a lower platform 3 on the ground and an upper platform 4 in the air, a pair of vertical posts 10 spaced apart around a shaft 20d as the center are provided between the upper and lower platforms 3 and 4, and a spiral guide 2 is passed up and down between the vertical posts 10 with the shaft 20 beingas the central axis, and the ball B is seated at a point on a spiral guide 2.

The shaft 20 is connected to the spiral guide 2 by a connecting rod 22, and thus, when the shaft 20 rotates, the spiral guide 2 also rotates. The ball B is turned according to the rotation of the spiral guide 2, and is stably lifted by a friction with the vertical post 10.

The ball B arriving at the upper end of the spiral guide 2 draws a free trajectory while passing along a rail 204 of the ball rolling section 200 and is discharged to the ground through the outlet 202.

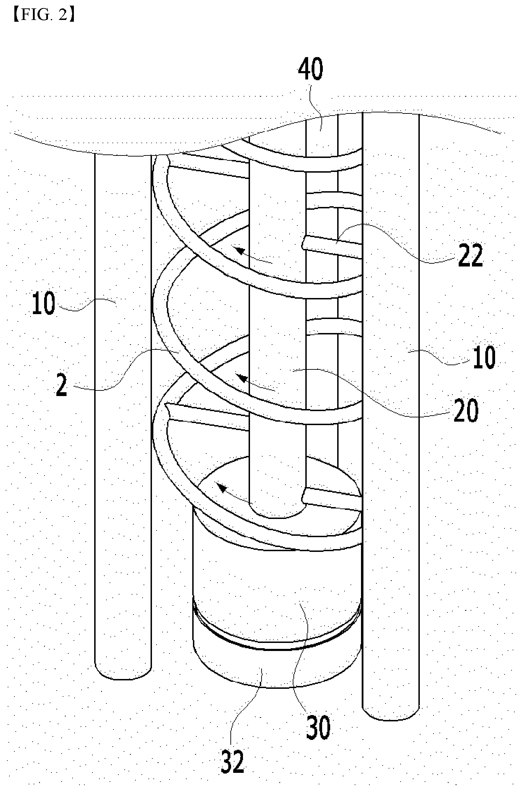

FIG. 2 is an enlarged perspective view of the lower portion of the ball lifting device of the present disclosure.

A circular stand 32 is provided at the central bottom of the lower platform 3. The lower end of the shaft 20 penetrating the stand 32 is connected to a drive source (not shown), for example, a motor, and the shaft 20 is rotated by the rotation of the motor. The upper end of the shaft 20 is inserted into a housing groove formed in the center of the upper platform 4. Therefore, although the shaft 20 has a long rod shape, both ends thereof are supported by the upper and lower platforms 4, so that a stable and long-term rotational movement can be performed. The position where the drive source is provided is not limited, for example, the drive source is provided on the upper platform 4 instead of the ground.

The spiral guide 2 is composed of a plurality of turns in a shape that inclines as it goes upward, and the diameter and pitch can be appropriately selected according to the size of the ball B. Since the spiral guide 2 is connected to the shaft 20 by the connecting rod 22 as described above, so that the spiral guide 2 rotates structurally integrally with the shaft 20. The connecting rods 22 may be provided at regular intervals, for example, every 3 pitches or every pitch, but the shape or number thereof does not limit the scope of the present disclosure as long as they perform the function of structurally integrating.

The lower portion of the spiral guide 2 adjacent to the lower platform 3 is connected to an introduction rail serving as a ball guide (not shown), which can automatically and continuously accommodate the balls.

The spiral guide 2 may be provided so as to rotate adjacent to the vertical post 10 as a whole.

The spiral guide 2 may be provided in a double spiral structure to lift two types of balls with different pitches, for example basketball and volleyball.

Although the spiral guide 2 is disclosed in the form of a line, it can be provided by changing in the form of the surface.

The support post 40 is provided between the shaft 20 and the vertical post 10, and serves to support the ball B so that it can be stably lifted without going out. A plurality of the support posts 40 may be provided.

The ball lifting device 100 of the present disclosure may be provided in connection with a sports facility. In this case, the ball rolling section 200 is connected to a ball supply device (not shown), and the outlet of the ball supply device may be provided at a position that supplies the ball to an athlete during exercise, for example, thereby establishing a system that automatically supplies the ball in sequence.

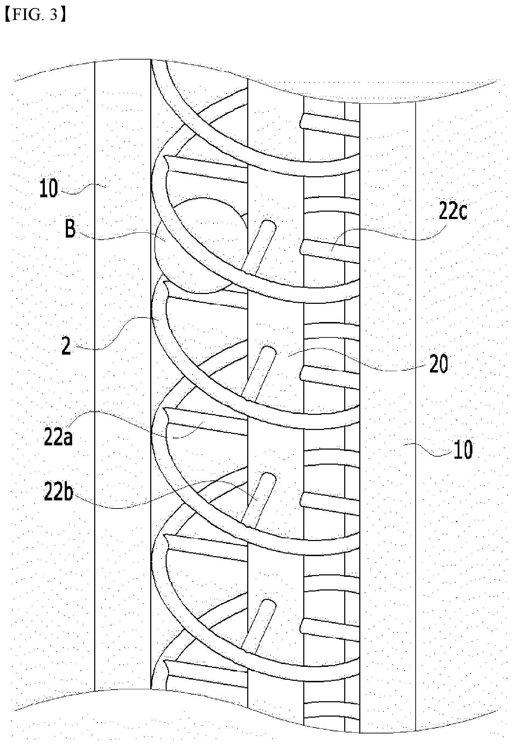

FIG. 3 is a perspective view of a ball lifting device 100 according to a second embodiment of the present disclosure.

The difference from the first embodiment is that the support post 40 is eliminated, the spiral guide 2 is thinly formed, and three connecting rods 22a, 22b and 22c are provided at predetermined points at uniform intervals. The ball B can be seated on the connecting rods 22a, 22b, 22c even in the absence of the support post 40, and lifts in conjunction with the rotation of the shaft 20 and the connecting rods 22a, 22b, 22c. Thus, it can be seen that it moves more dynamically than the first embodiment.

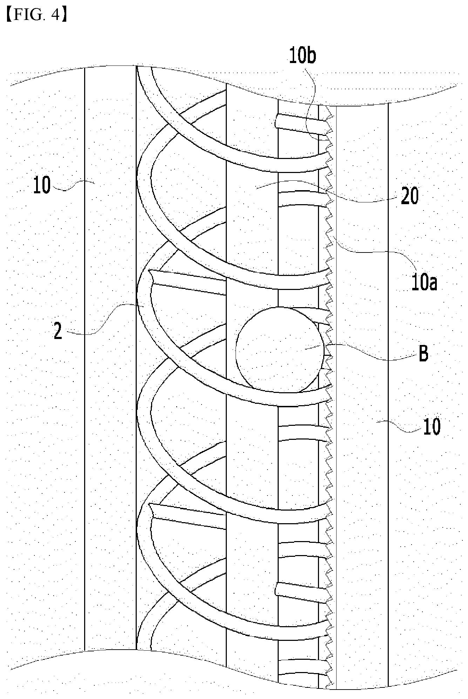

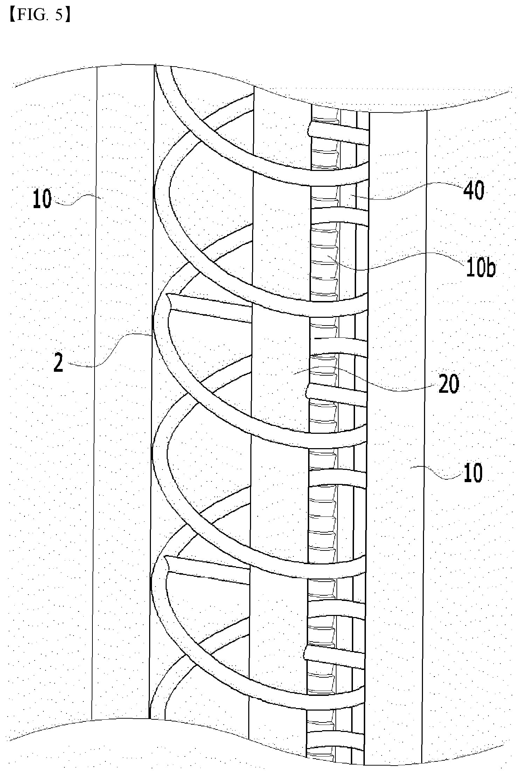

Next, a third embodiment of the present disclosure will be described with reference to FIGS. 4 and 5. The third embodiment is a type in which the ball B is inflated by being filled with air like volleyball or basketball. When the surface of the ball B comes into contact with a vertical post 10 or a support post 40 made of a metal material, the post receives a friction if the surface of the ball is a leather or a rubber, and thus, the ball may be crushed and separated off.

Therefore, in the third embodiment of the present disclosure, a guide rail 10a is provided adjacent to the vertical post 10 in the longitudinal direction as shown in FIG. 4. The guide rail 10a includes protrusions or a concavo-convex gear 10b that is continuously formed by being protruded on the side face. The guide rail 10a is made of a material, for example, a plastic, which can reduce the friction force when it comes into contact with the ball B. The ball B receives a frictional force that comes into contact with the gear 10b of the guide rail 10a without coming into direct contact with the vertical post 10, whereby the ball B can be quickly and smoothly lifted by the rotation of the shaft connected to the motor.

In FIG. 5, the support post 40 is provided with a guide rail 10a including a gear 10b, unlike FIG. 4. The functions and operations in this case are the same as those described in FIG. 4.

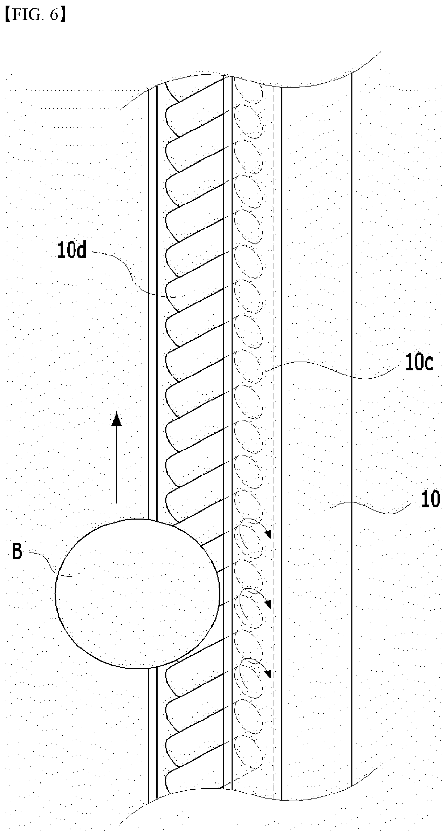

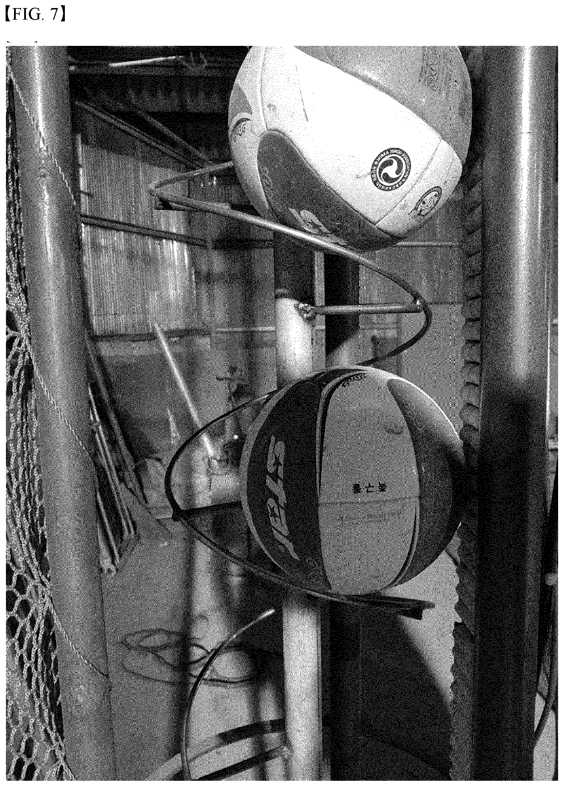

FIG. 6 shows an embodiment in which a guide frame 10c is provided in the longitudinal direction adjacent to the vertical post 10, and the rollers 10d are continuously provided in the height direction inside the guide frame 10c. FIG. 7 is a photograph of the ball lifting device for implementing FIG. 6. In this case, the ball B comes into contact with a roller 10d without coming into direct contact with the vertical post 10, so that the ball B slides up and moves along the roller 10d while the roller 10d rotates due to the frictional force of the ball. As a result, it can be expected that the ball is lifted more smoothly and stably as compared with FIG.

When the ball lifting device 100 of the present disclosure is used, it was confirmed that not only the ball can be lifted smoothly and quickly, but also the ball can be given an appropriate movement, the device can be easily installed in an appropriate place, and the strength and durability of the device are also excellent.

### [Industrial Availability]

The present disclosure can be used in sports industries such as physical education and leisure.

## Claims

1. A ball lifting system comprising: a ball lifting device (100) comprising:
a shaft (20) provided vertically long by connecting a central portion between a lower platform (3) on the ground and an upper platform (4) in the air, a plurality of vertical posts (10) spaced apart around the shaft (20) as the center are provided to extend long between the upper and lower platforms (3), a spiral guide (2) is provided to extend up and down between the vertical posts (10) around the shaft (20) as the central axis, and the shaft (20) is connected to the spiral guide (2) by connecting rods (22); and
a guide rail (10a, 10b, 10c) is provided in the length direction integrally with one of the vertical posts (10) by continuously contacting that vertical post (10), and
further comprising: a ball containing a rubber or a leather as a type of material that is filled with air and inflated, and
wherein the ball is adapted not to come into contact with the vertical posts (10) due to the rotation of the shaft (20) but is adapted to be lifted by contacting the protrusions of the guide rail (10a, 10b, 10c).

2. The ball lifting system according to claim 1, wherein the spiral guide (2) is composed of a plurality of turns in a shape that inclines upward as it goes upward.

3. The ball lifting system according to claim 2, wherein a support post (40) is further provided between the shaft (20) and the vertical posts (10) to support the ball so that it can be stably lifted without going out.

4. The ball lifting system according to claim 3, wherein the guide rail (10a, 10b, 10c) is further provided by continuously contacting the support post (40).

## Patentansprüche

1. Ballhebesystem, das aufweist: eine Ballhebevorrichtung (100), die aufweist:
eine Welle (20), die vertikal lang ist und einen zentralen Abschnitt zwischen einer unteren Plattform (3) auf dem Boden und einer oberen Plattform (4) in der Luft verbindet,
eine Vielzahl von vertikalen Pfosten (10) ist vorgesehen, die um die Welle (20) als Zentrum beabstandet sind, um sich lang zwischen den oberen und unteren Plattformen (3) zu erstrecken, eine spiralförmige Führung (2) ist vorgesehen, um sich aufwärts und abwärts zwischen den vertikalen Pfosten (10) um die Welle (20) als zentrale Achse zu erstrecken, und die Welle (20) mit der spiralförmigen Führung (2) durch Verbindungsstangen (22) verbunden ist; und
eine Führungsschiene (10a, 10b, 10c) ist in Längsrichtung integral mit einem der vertikalen Pfosten (10) vorgesehen, indem sie kontinuierlich mit diesem vertikalen Pfosten (10) in Kontakt steht, und
ferner aufweisend: einen Ball, der einen Kautschuk oder ein Leder als Materialart enthält, der mit Luft gefüllt und aufgeblasen ist, und
wobei der Ball so ausgebildet ist, dass er durch die Drehung der Welle (20) nicht mit den vertikalen Pfosten (10) in Berührung kommt, sondern durch Kontakt mit den Vorsprüngen der Führungsschiene (10a, 10b, 10c) angehoben wird.

2. Ballhebesystem nach Anspruch 1, wobei die spiralförmige Führung (2) aus einer Vielzahl von Windungen in einer Form besteht, die sich nach oben hin neigt.

3. Ballhebesystem nach Anspruch 2, wobei ein Stützpfosten (40) zwischen der Welle (20) und den vertikalen Pfosten (10) vorgesehen ist, um den Ball so zu stützen, dass er stabil angehoben werden kann, ohne herauszufallen.

4. Ballhebesystem nach Anspruch 3, wobei die Führungsschiene (10a, 10b, 10c) weiterhin durch kontinuierlichen Kontakt mit dem Stützpfosten (40) vorgesehen ist.

## Revendications

1. Système de levage de ballon comprenant : un dispositif de levage de ballon (100) comprenant :
un arbre (20) prévu verticalement longitudinalement par raccordement d'une partie centrale entre une plateforme inférieure (3) sur le sol et une plateforme supérieure (4) dans l'air,
une pluralité de montants verticaux (10) espacés autour de l'arbre (20) en tant que centre sont prévus pour s'étendre longitudinalement entre les plateformes supérieure et inférieure (3), un guide en spirale (2) est prévu pour s'étendre vers le haut et vers le bas entre les montants verticaux (10) autour de l'arbre (20) en tant qu'axe central, et l'arbre (20) est raccordé au guide en spirale (2) par raccordement de tiges (22) ; et
un rail de guidage (10a, 10b, 10c) est prévu dans la direction longitudinale d'un seul tenant avec l'un des montants verticaux (10) par entrée en contact continue avec ce montant vertical (10), et
comprenant en outre : un ballon contenant un caoutchouc ou un cuir comme type de matériau qui est rempli d'air et gonflé, et
dans lequel le ballon est adaptée pour ne pas venir en contact avec les montants verticaux (10) en raison de la rotation de l'arbre (20) mais est adaptée pour être soulevée par entrée en contact avec les saillies du rail de guidage (10a, 10b, 10c).

2. Système de levage de ballon selon la revendication 1, dans lequel le guide en spirale (2) est composé d'une pluralité de spires selon une forme qui s'incline vers le haut à mesure qu'il va vers le haut.

3. Système de levage de ballon selon la revendication 2, dans lequel un montant de support (40) est en outre prévu entre l'arbre (20) et les montants verticaux (10) pour supporter le ballon de sorte qu'elle peut être soulevée de manière stable sans sortir.

4. Système de levage de ballon selon la revendication 3, dans lequel le rail de guidage (10a, 10b, 10c) est prévu en outre par entrée en contact continue avec le montant de support (40).
